(19) Europäisches Patentamt
European Patent Office
Office européen des brevets

(11) EP 3 795 636 A1

(12) EUROPEAN PATENT APPLICATION

(43) Date of publication:
24.03.2021 Bulletin 2021/12

(51) Int Cl.:
*C08L 69/00* (2006.01) *C08G 65/00* (2006.01)

(21) Application number: 19198610.8

(22) Date of filing: 20.09.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **JENKINS, Lauri L.**
  **Selkirk, NY 12158 (US)**
- **WILLIAMS III, Edward**
  **Exton, PA 19341 (US)**
- **SPANGLER, Greg**
  **Howell, MI 48843 (US)**

(74) Representative: **Elzaburu S.L.P.**
**Miguel Angel 21, 2nd floor**
**28010 Madrid (ES)**

# (54) USE OF PER-FLUORINATED POLYETHERS FOR MODIFICATION OF POLYCARBONATE COPOLYMERS

(57) Disclosed herein are compositions comprising from about 0.01 wt. % to about 98 wt. % of a polycarbonate polymer component; and from greater than 1 wt. % to about 10 wt. % of a perfluorinated polyether additive, wherein the combined weight percent value of all components does not exceed 100 wt. %, and all weight percent values are based on the total weight of the composition. The composition exhibits a viscosity less than that of a substantially identical composition in the absence of the perfluorinated polyether additive when tested in accordance with ASTM D3835 at a shear rate of 500 $s^{-1}$. The composition may comprise a wear factor K of less than 200 x 10-10 in 5-min/ft-lb-hr as measured at 50 fpm and 40 psi compared to steel in accordance with a modified ASTM D-3702.

EP 3 795 636 A1

## Description

### TECHNICAL FIELD

The disclosure relates to polymer compositions having a perfluorinated polyether additive to provide improved rheological and wear properties.

### BACKGROUND

Additives may be used to impart certain physical properties to a given polymer composition. Depending upon the profile of the base polymer matrix, these additives may improve processing, melt flow, and stability among a wealth of other properties. There remains a need for an internally lubricated healthcare grade copolymer resin that provides sufficiently low viscosity at high shear to mold thin-walled parts.

Perfluorinated polymers have been added to polymer compositions to impart certain friction related properties. US Patent Publication No. 20100019487 discloses a coupling article molded of a reduced friction composite material. The composite material includes a base, an additive, and an optional colorant where the base is a polymer such as a polycarbonate or polysulfone and the additive includes one or more materials that reduce the frictional characteristics of the base. An example of an additive disclosed therein is a perfluoroalkyl ether material such as Fluoroguard™ from Dupont. The amount of the perfluoroalkyl ether additive is not disclosed.

US Patent Publication No. 20090318047 discloses a method for producing a monofilament from a mixture of a melt-spinnable, filament-forming polymer and a modifying additional polymer. The filament-forming polymer may include for example a polycarbonate, polyester (particularly, polyester), or polyamide; while the modifying additional polymer may comprise a perfluorinated polyether having a molecular weight of 500-6,000 Daltons. The publication provides that the perfluorinated polyether is present preferably in an amount from 0.01 wt. % to 1 wt. %.

Literature studies have established the use of perfluorinated polyethers in thermoplastics as processing aids in amounts less than 1 wt. % based on the total weight of the thermoplastic. See, Plastic Additives & Compounding, January 2001, 30-32; Journal of Fluorine Chemistry 132 (2011) 885-891; and Plastics Additives & Compounding, February 2001, 28-30.

### SUMMARY

The disclosure relates to a composition comprising: from about 0.01 wt. % to about 98 wt. % of a polycarbonate polymer component; and from greater than 1 wt. % to about 10 wt. % of a perfluorinated polyether additive, wherein the combined weight percent value of all components does not exceed 100 wt. %, and all weight percent values are based on the total weight of the composition. The composition may exhibit a viscosity less than that of a substantially identical composition in the absence of the perfluorinated polyether additive when tested in accordance with ASTM D3835 at a shear rate of 500 $^{s-1}$. The composition may comprise a wear factor K of less than 200 x $10^{-10}$ in 5 minute foot-pounds-per hour (min/ft-lb-hr) (0.39 British thermal units, btu per hour, btu/h) as measured at 50 feet per minute (fpm) (0.254 meters per second) and 40 pounds force per square inch (psi) (275.8 kilopascals, KPa) compared to steel in accordance with a modified ASTM D-3702.

The disclosure also relates methods of forming the disclosed compositions as well as articles formed therefrom.

### DETAILED DESCRIPTION OF ILLUSTRATIVE EMBODIMENTS

Filled polymer compositions can have a number of improved properties based upon the type of filler added. The disclosure addresses the need for an internally lubricated healthcare grade copolymer resin that provides sufficiently low viscosity at high shear to mold a thin-walled part required by customer. Neat polymer resin or polytetrafluoroethylene modified polymer resin has not achieved these properties. More specifically, the use of the perfluorinated polyether at higher than conventional concentrations may uniquely provide low viscosity at shear to provide thin-walled molded parts. Literature references for PFPE (Chemours Fluoroguard™ SG) recommend use at levels below 1%. The present disclosure establishes that the use of PFPE additives at or above 2% may greatly reduce the viscosity/shear behavior of polycarbonate copolymer resins and at 5% greatly reduced the wear factor (plastic to steel) for the polymer.

The disclosed polycarbonate compositions including perfluorinated polyether additive in amounts greater than 1 wt. % based on the weight of the polycarbonate composition exhibited greater rheological and wear properties when compared to the neat polycarbonate resin or the polycarbonate resin modified with a polytetrafluoroethylene (PTFE) or silicone additive. The use of the PFPE at higher than normally used concentrations (in the industry), uniquely provided the low viscosity at shear to product quality parts in this thin walled part.

In an aspect, the composition may comprise from about 0.01 wt. % to about 98 wt. % of a polycarbonate polymer

component; and from greater than 1 wt. % to about 10 wt. % of a perfluorinated polyether additive, wherein the combined weight percent value of all components does not exceed 100 wt. %, and all weight percent values are based on the total weight of the composition. The composition may exhibit a viscosity less than that of a substantially identical composition in the absence of the perfluorinated polyether additive when tested in accordance with ASTM D3835 at a shear rate of 500 s-1. The composition may comprise a wear factor K of less than 200 x $10^{-10}$ in 5-min/ft-lb-hr as measured at 50 fpm and 40 psi compared to steel in accordance with a modified ASTM D-3702.

The present disclosure can be understood more readily by reference to the detailed description, examples, drawings, and claims described herein. It is to be understood that this disclosure is not limited to the specific thermoplastic compositions, articles, devices, systems, and/or methods disclosed unless otherwise specified, as such can, of course, vary. It is also to be understood that the terminology used herein is for the purpose of describing particular aspects only and is not intended to be limiting. Those of ordinary skill in the relevant art will recognize and appreciate that changes and modifications can be made to the various aspects of the disclosure described herein, while still obtaining the beneficial results of the present disclosure. It will also be apparent that some of the desired benefits of the present disclosure can be obtained by selecting some of the features of the present disclosure without utilizing other features. The present description is provided as illustrative of the principles of the disclosure and not in limitation thereof. Various combinations of elements of this disclosure are encompassed by this disclosure, e.g., combinations of elements from dependent claims that depend upon the same independent claim.

POLYCARBONATE COMPONENT

In various aspects, the disclosed composition may comprise a polycarbonate component. As used herein, polycarbonate refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates. In certain aspects, the polycarbonate can include any polycarbonate material or mixture of materials, for example, as recited in U.S. Patent No. 7,786,246, which is hereby incorporated in its entirety for the specific purpose of disclosing various polycarbonate compositions and methods. In some aspects the polycarbonate is a homopolymer including repeating units derived from bisphenol A. The polycarbonate may include polycarbonate monomers such as, but not limited to, 2-phenyl-3,3'-bis (4-hydroxy phenyl) phthalimidine (PPPBP) and dimethyl bisphenol cyclohexane (DMBPC).

In one aspect, a polycarbonate, as disclosed herein, can be an aliphatic-diol based polycarbonate. In another aspect, a polycarbonate can comprise a carbonate unit derived from a dihydroxy compound, such as for example a bisphenol that differs from the aliphatic diol. In various aspects, the polycarbonate can comprise copolymers comprising two or more distinct carbonate units. For example, a polycarbonate copolymer can comprise repeating carbonate units derived from bisphenol acetophenone (BisAP) and a second, chemically distinct dihydroxy monomer such as a bisphenol, e.g. bisphenol A. Alternatively, a polycarbonate copolymer can comprise repeating carbonate units derived from (N-Phenyl Phenolphthalein) PPPBP and a second, chemically distinct dihydroxy monomer such as a bisphenol, e.g. bisphenol A.

In one aspect, the polycarbonate may comprises aromatic carbonate chain units and includes compositions having structural units of the formula (I):

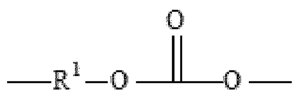

(I)

in which the $R^1$ groups are aromatic, aliphatic or alicyclic radicals. Beneficially, $R^1$ is an aromatic organic radical and, in an alternative aspect, a radical of the formula (II):

$-A^1-Y^1-A^2-$ (II)

wherein each of $A^1$ and $A^2$ is a monocyclic divalent aryl radical and $Y^1$ is a bridging radical having zero, one, or two atoms which separate $A^1$ from $A^2$. In an exemplary aspect, one atom separates $A^1$ from $A^2$. In another aspect, zero atoms separate $A^1$ from $A^2$, with an illustrative example being bisphenol. The bridging radical $Y^1$ can be a hydrocarbon group or a saturated hydrocarbon group such as methylene, cyclohexylidene or isopropylidene.

Polycarbonates can be produced by the interfacial reaction polymer precursors such as dihydroxy compounds in which only one atom separates $A^1$ and $A^2$. As used herein, the term "dihydroxy compound" includes, for example, bisphenol compounds having general formula (III) as follows:

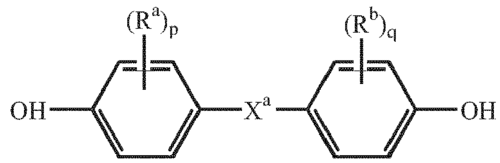

(III)

wherein $R^a$ and $R^b$ each independently represent hydrogen, a halogen atom, or a monovalent hydrocarbon group; p and q are each independently integers from 0 to 4; and $X^a$ represents one of the groups of formula (IV):

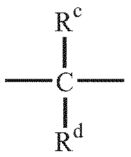

or

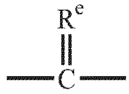

(IV)

wherein $R^c$ and $R^d$ each independently represent a hydrogen atom or a monovalent linear or cyclic hydrocarbon group, and $R^e$ is a divalent hydrocarbon group.

Non-limiting examples of the types of bisphenol compounds that can be represented by formula (IV) can include the bis(hydroxyaryl)alkane series such as, 1,1-bis(4-hydroxyphenyl)methane, 1,1 -bis(4-hydroxyphenyl)ethane; bis(hydroxyaryl)cycloalkane series such as, 1,1-bis(4-hydroxyphenyl)cyclopentane, 1,1-bis(4-hydroxyphenyl)cyclohexane, or the like, or combinations including at least one of the foregoing bisphenol compounds. Other bisphenol compounds that can be represented by formula (III) include those where X is -O-, -S-, -SO- or $-SO_2-$. Some examples of such bisphenol compounds are bis(hydroxyaryl)ethers such as 4,4'-dihydroxy diphenylether, 4,4'-dihydroxy-3,3'-dimethylphenyl ether, or the like; bis(hydroxy diaryl)sulfides, such as 4,4'-dihydroxy diphenyl sulfide, 4,4'-dihydroxy-3,3'-dimethyl diphenyl sulfide, or the like; bis(hydroxy diaryl) sulfoxides, such as, 4,4'-dihydroxy diphenyl sulfoxides, 4,4'-dihydroxy-3,3'-dimethyl diphenyl sulfoxides, or the like; bis(hydroxy diaryl)sulfones, such as 4,4'-dihydroxy diphenyl sulfone, 4,4'-dihydroxy-3,3'-dimethyl diphenyl sulfone, or the like; or combinations including at least one of the foregoing bisphenol compounds.

Other bisphenol compounds that can be utilized in the polycondensation of polycarbonate are represented by the formula (V)

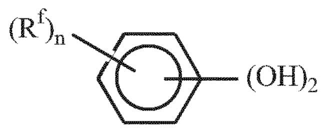

(V)

wherein, $R^f$, is a halogen atom of a hydrocarbon group having 1 to 10 carbon atoms or a halogen substituted hydrocarbon group; n is a value from 0 to 4. When n is at least 2, $R^f$ can be the same or different. Examples of bisphenol compounds that can be represented by the formula (IV), are resorcinol, substituted resorcinol compounds such as 3-methyl resorcin, 3-ethyl resorcin, 3-propyl resorcin, 3-butyl resorcin, 3-t-butyl resorcin, 3-phenyl resorcin, 3-cumyl resorcin, 2,3,4,6-tetrafluoro resorcin, 2,3,4,6-tetrabromo resorcin, or the like; catechol, hydroquinone, substituted hydroquinones, such as 3-methyl hydroquinone, 3-ethyl hydroquinone, 3-propyl hydroquinone, 3-butyl hydroquinone, 3-t-butyl hydroquinone, 3-phenyl hydroquinone, 3-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing bisphenol compounds.

In one aspect, the bisphenol compound is bisphenol A. In an exemplary aspect, the polycarbonate polymer component comprises a bisphenol A polycarbonate polymer. In another exemplary aspect, the polycarbonate component comprises a blend of at least two different grade bisphenol A polycarbonates. To that end, a polycarbonate grade can, for example, be characterized by the melt volume rate (MVR) of the polycarbonate. For example, a disclosed polycarbonate, such as a bisphenol A polycarbonate, can be characterized by exhibiting a melt Volume Rate (MVR) in the range of from 4 g/10 min to 30 g/10 min at 300 °C/1.2 kg. For example, the MVR can range from 10 g/10 min to 25 g/10 min, including for example a MVR in the range of from 15 g/10 min to 20 g/10 min. Further, for example, the MVR can be in the range of from 4 g/10 min or 30 g/10 min.

In certain aspects, the polycarbonate component includes a polycarbonate-siloxane copolymer. The polycarbonate-siloxane copolymer in some aspects has a siloxane content of from about 5 wt% to about 45 wt% based on the total weight of the polycarbonate-polysiloxane copolymer. In further aspects the polycarbonate-siloxane copolymer has

a siloxane content of from about 20 wt% to about 45 wt% based on the total weight of the polycarbonate-polysiloxane copolymer.

As used herein, the term "polycarbonate-polysiloxane copolymer" is equivalent to polysiloxane-polycarbonate copolymer, polycarbonate-polysiloxane polymer, or polysiloxane-polycarbonate polymer. In various aspects, the polycarbonate-polysiloxane copolymer can be a block copolymer comprising one or more polycarbonate blocks and one or more polysiloxane blocks. The polysiloxane-polycarbonate copolymer comprises polydiorganosiloxane blocks comprising structural units of the general formula (VI) below:

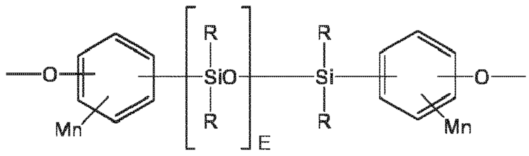

(VI)

wherein the polydiorganosiloxane block length (E) is from about 20 to about 60; wherein each R group can be the same or different, and is selected from a $C_{1-13}$ monovalent organic group; wherein each M can be the same or different, and is selected from a halogen, cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ aralkyl, $C_7$-$C_{12}$aralkoxy, $C_7$-$C_{12}$ alkylaryl, or $C_7$-$C_{12}$ alkylaryloxy, and where each n is independently 0, 1, 2, 3, or 4. The polysiloxane-polycarbonate copolymer also comprises polycarbonate blocks comprising structural units of the general formula (VII) below:

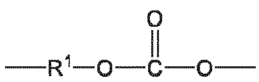

(VII)

wherein at least 60 percent of the total number of $R^1$ groups comprise aromatic moieties and the balance thereof comprise aliphatic, alicyclic, or aromatic moieties. Polysiloxane-polycarbonates materials include materials disclosed and described in U.S. Patent No. 7,786,246, which is hereby incorporated by reference in its entirety for the specific purpose of disclosing various compositions and methods for manufacture of same.

Non-limiting examples of polysiloxane-polycarbonate copolymers can comprise various copolymers available from SABIC. In one aspect, the polysiloxane-polycarbonate copolymer can include 10 wt% or less, specifically 6 wt% or less, and more specifically 4 wt% or less, of the polysiloxane based on the total weight of the polysiloxane-polycarbonate copolymer, and can generally be optically transparent and are commercially available under the designation EXL-T from SABIC. In another aspect, the polysiloxane-polycarbonate copolymer can include 10 wt% or more, specifically 12 wt% or more, and more specifically 14 wt% or more, of the polysiloxane copolymer based on the total weight of the polysiloxane-polycarbonate copolymer, are generally optically opaque and are commercially available under the trade designation EXL-P from SABIC.

In an aspect, the polysiloxane-polycarbonate copolymer can contain 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6% weight siloxane polysiloxane-polycarbonate copolymer can have a melt volume flow rate (MVR) of about 10 $cm^3$/10 min at 300 °C /1.2 kg (see C9030T, a 6 % by weight polysiloxane content copolymer available from SABIC as "transparent" EXL C9030T resin polymer). In another example, the polysiloxane-polycarbonate block can include 20 % by weight polysiloxane based upon the total weight of the polysiloxane block copolymer. For example, an appropriate polysiloxane-polycarbonate copolymer can be a bisphenol A polysiloxane-polycarbonate copolymer endcapped with para-cumyl phenol (PCP) and having a 20 % polysiloxane content (see C9030P, commercially available from SABIC as the "opaque" EXL C9030P). In various aspects, the weight average molecular weight of the 20 % polysiloxane block copolymer can be about 29,900 Daltons to about 31,000 Daltons when tested according to a polycarbonate standard using gel permeation chromatography (GPC) on a cross-linked styrene-divinylbenzene column and calibrated to polycarbonate references using a UV-VIS detector set at 264 nanometers (nm) on 1 milligram per milliliter (mg/ml) samples eluted at a flow rate of about 1.0 ml/minute. Moreover, the 20% polysiloxane block copolymer can have a melt volume rate (MVR) at 300 °C/1.2 kg of 7 $cm^3$/10 min and can exhibit siloxane domains sized in a range of from about 5 micron to about 20 micrometers (microns, $\mu$m).

In an aspect, the polysiloxane-polycarbonate copolymer can contain 60 % by weight polysiloxane content based upon the total weight of the polysiloxane-polycarbonate copolymer. In various aspects, the 60 % by weight polysiloxane block copolymer can have a weight average molecular weight (Mw) of from about 32,000 to 36,000 Daltons using gel

permeation chromatography with a bisphenol A polycarbonate absolute molecular weight standard.

In some aspects, the polycarbonate component can be present in the thermoplastic composition in an amount from about 0.01 wt. % to about 98 wt. %. In other aspects, the polymeric base resin can be present in an amount from about 0.01 wt. % to about 95 wt. %, or from about 0.01 wt. % to about 95 wt. %, or from about 0.01 wt. % to about 95 wt. %, or from about 0.01 wt. % to about 95 wt. %, or from about 0.01 wt. % to about 95 wt. %, or from about 0.01 wt. % to about 95 wt. %, from about 0.01 wt. % to about 95 wt. %, or from about 80 wt. % to about 95 wt. %, or from about 65 wt. % to about 99 wt. %, or from about 60 wt. % to about 99 wt. %, or from about 45 wt. % to about 95 wt. %. The thermoplastic composition may comprise from about 50 weight percent (wt. %) to about 99 weight percent of the polycarbonate component based on the total weight of the composition and in consideration of any optional fillers or additives.

PERFLUORINATED POLYETHER ADDITIVE

The disclosed thermoplastic compositions may comprise a perfluorinated polyether additive. Perfluorinated polyether (or perfluoropolyether PFPE) additives may refer to long chain polymers consisting of carbon, oxygen, and fluorine atoms. The molecular structure may be branched, linear, or a combination thereof. A general structure for PFPEs is presented in Formula VIII. Generally, these structures do not include reactive groups such as -COOH or -OH end groups that would interact with end groups in polyester, polyamide or polycarbonate polymers.

$$F\text{-}(CF(CF_3)\text{-}CF_2\text{-}O)_n\text{-}CF_2CF_3 \qquad \text{(VIII)}$$

The PFPE may be an inert liquid having a molecular weight of 500-6,000 Daltons (Da). The disclosed PFPE may also have a degree of polymerization, n, from about 10 to about 60.

As noted herein, in certain examples the composition disclosed herein includes from greater than 1 wt. % to 10 wt. %. In further examples however, the composition may comprise from about 1.5 wt. % to about 10 wt. %, or from 2 wt. % to 10 wt. %, or from about 3 wt. % to about 10 wt. % of a perfluorinated polyether additive. In other examples, the resin composition includes from 4 wt. % to 10 wt. %, or from about 5 wt. % to about 10 wt. % perfluorinated polyether additive, or from about 2 wt. % to about 8 wt. %, or from about 3 wt. % to about 8 wt. % perfluorinated polyether additive.

OTHER ADDITIVES

The disclosed compositions can optionally comprise one or more additives conventionally used in the manufacture of molded thermoplastic parts with the proviso that the optional additives do not adversely affect the desired properties of the resulting composition. Mixtures of optional additives can also be used. Such additives may be mixed at a suitable time during the mixing of the components for forming the composite mixture. For example, the disclosed thermoplastic compositions can comprise one or more fillers, plasticizers, stabilizers, anti-static agents, flame-retardants, impact modifiers, colorant, antioxidant, and/or mold release agents. In one aspect, the composition further comprises one or more optional additives selected from an antioxidant, flame retardant, inorganic filler, and stabilizer. Other additives and/or fillers may be present in an amount of from about 0.01 wt. % to about 10 wt. %, 20 wt. %, 30 wt. %, 40 wt.%, 50 wt. %, 60 wt. %, 70 wt. %, 80 wt. %, or to about 90 wt. %.

Exemplary heat stabilizers include, for example, organo phosphites; phosphonates; phosphates, or combinations including at least one of the foregoing heat stabilizers. Heat stabilizers are generally used in amounts of from 0.01 to 0.5 parts by weight based on 100 parts by weight of the total composition, excluding any filler.

Exemplary antioxidants include, for example, organophosphites; alkylated monophenols or polyphenols; alkylated reaction products of polyphenols with dienes; butylated reaction products of para-cresol or dicyclopentadiene; alkylated hydroquinones; hydroxylated thiodiphenyl ethers; alkylidene-bisphenols; benzyl compounds; amides or esters of beta-(3,5-di-tert-butyl-4-hydroxyphenyl)-propionic acid; esters of beta-(5-tert-butyl-4-hydroxy-3-methylphenyl)-propionic acid with monohydric or polyhydric alcohols; esters of thioalkyl or thioaryl compounds; or combinations including at least one of the foregoing antioxidants. Antioxidants are generally used in amounts of from 0.01 to 0.5 parts by weight, based on 100 parts by weight of the total composition, excluding any filler.

The disclosed thermoplastic compositions can further comprise an optional filler, such as, for example, an inorganic filler or reinforcing agent. The specific composition of filler, if present, can vary, provided that the filler is chemically compatible with the remaining components of the thermoplastic composition. In one aspect, the thermoplastic composition comprises a mineral filler such as talc.

In another aspect, an exemplary filler can comprise metal silicates and silica powders; boron-containing oxides of aluminum (Al), magnesium (Mg), or titanium (Ti); anhydrous or hydrated calcium sulfate; wollastonite; hollow and/or solid glass spheres; kaolin; single crystal metallic or inorganic fibers or "whiskers"; glass or carbon fibers (including continuous and chopped fibers, including flat glass fibers) ; sulfides of molybdenum (Mo) or zinc (Zn); barium compounds; metals and metal oxides; flaked fillers; fibrous fillers; short inorganic fibers reinforcing organic fibrous fillers formed from

organic polymers capable of forming fibers (e.g., polyether ether ketone (PEEK), polyetherimide (PEI), polytetrafluoroethylene (PTFE), polyphenylene sulfide (PPS)); and fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

Exemplary light stabilizers include, for example, benzotriazoles, 2-(2-hydroxy-5-tert-octylphenyl)-benzotriazole and 2-hydroxy-4-n-octoxy benzophenone or a combination thereof. Light stabilizers are generally used in amounts of from 0.1 to 1.0 parts by weight (pbw) or about 0.1 pbw to about 1.0 pbw, based on 100 parts by weight of the total composition, excluding any filler.

Exemplary plasticizers include, for example, phthalic acid esters such as dioctyl-4,5-epoxy-hexahydrophthalate, tris-(octoxycarbonylethyl)isocyanurate, tristearin, epoxidized soybean oil or the like, or combinations including at least one of the foregoing plasticizers. Plasticizers are generally used in amounts of from 0.5 to 3.0 parts by weight, or from about 0.5 pbw to about 3 pbw, based on 100 parts by weight of the total composition, excluding any filler.

Exemplary antistatic agents include, for example, glycerol monostearate, sodium stearyl sulfonate, sodium dodecylbenzenesulfonate or the like, or combinations of the foregoing antistatic agents. In one aspect, carbon fibers, carbon nanofibers, carbon nanotubes, carbon black, or any combination of the foregoing may be used in a polymeric resin containing chemical antistatic agents to render the composition electrostatically dissipative.

Exemplary mold releasing agents or lubricants include for example stearates (including metal or alkyl stearates) or waxes. When used, mold releasing agents are generally used in amounts of from 0.1 to 1.0 parts by weight (or from about 0.1 pbw to about 1 pbw), or from 0.1 to 5 parts by weight (or from about 0.1 pbw to about 5 pbw) based on 100 parts by weight of the total composition, excluding any filler.

PROPERTIES AND ARTICLES OF MANUFACTURE

The disclosed compositions provide internally lubricated healthcare grade copolymer resins. The compositions exhibit sufficiently low viscosity at high shear making them particularly useful for thin-wall molding applications. The use of the PFPE at higher than conventionally used concentrations, uniquely provided the low viscosity at shear to produce quality parts in thin walled part. The composition may provide both improved rheological and wear performance.

Rheological properties of the disclosed compositions are improved. In some aspects, the composition exhibits a viscosity less than that of a substantially identical composition in the absence of the perfluorinated polyether additive when tested in accordance with ASTM D3835 at a shear rate of 500 $s^{-1}$. In yet further aspects, the composition also exhibits a viscosity less than that of a substantially identical composition in the absence of the perfluorinated polyether additive when tested in accordance with ASTM D3835 at a shear rate of 1000 $s^{-1}$, 1500 $s^{-1}$, 2000 $s^{-1}$, 2500 $s^{-1}$, 3000 $s^{-1}$, 3500 $s^{-1}$, and 4000 $s^{-1}$.

A molded article comprising the composition may exhibit certain improved wear properties. In various examples, the composition comprise an improved wear factor K. The wear factor may refer to an indication of a material's resistance to wear as a function of the volume of material lost, force (load, and velocity at the wear interface and time. A material with a lower wear factor (K) has greater resistance to wear and these values are useful for material comparison purposes. A molded article comprising the composition has a wear factor K of less than 200 x $10^{-10}$ in 5-min/ft-lb-hr as measured at 50 fpm and 40 psi compared to steel in accordance with a modified ASTM D-3702. In the modified ASTM D-3702, a Lewis LRI-1a automated wear tester may be used.

In one aspect, methods of forming the thermoplastic composition may comprise combining all the components except the continuous glass fiber into a high-speed mixer and uniformly mixing. The mixture may be subjected to melt extrusion and sent to an impregnator. Meanwhile, the continuous glass fiber may be sent into the impregnator to carry out disperse impregnation with the molten material. Die drawing at a setting port of the impregnator may be carried out followed by cooling, blow-drying, and granulating to obtain the plastic composition. In one example, a method of forming an article may comprise combining, to form a composition, from about 0.01 wt. % to about 98 wt. % of a polycarbonate polymer component, and from greater than 1 wt. % to about 10 wt. % of a perfluorinated polyether additive, wherein the combined weight percent value of all components does not exceed 100 wt. %, and all weight percent values are based on the total weight of the composition, and molding an article therefrom.

The resulting disclosed compositions can be used to provide any desired shaped, formed, or molded articles. For example, the disclosed thermoplastic compositions may be molded into useful shaped articles by a variety of means such as injection molding, extrusion, rotational molding, blow molding and thermoforming. As noted above, the disclosed thermoplastic compositions are particularly well suited for use in the manufacture of electronic components and devices. As such, according to some aspects, the disclosed thermoplastic compositions can be used to form articles such as printed circuit board carriers, burn in test sockets, flex brackets for hard disk drives, and the like. The compositions may possess excellent flow for injection molded, thin wall processing.

Shaped, formed, or molded articles including the thermoplastic compositions are also provided. The thermoplastic compositions can be molded into useful shaped articles by a variety of means such as injection molding, extrusion,

rotational molding, blow molding and thermoforming to form articles such as, for example, personal computers, notebook and portable computers, cell phone antennas and other such communications equipment, medical applications, radio frequency identifications (RFID) applications, automotive applications, and the like.

Thus, in certain aspects, the present disclosure pertains to shaped, formed, or molded articles including the thermoplastic compositions. The thermoplastic compositions can be molded into useful shaped articles by a variety of means as described herein. The demonstrated characteristics of the disclosed formulations make them well-suited for use in articles of manufacture in the medical, electric and electronic markets, especially those requiring thin-walled components. In particular aspects the article includes a thin wall including the thermoplastic composition having a nominal thickness of less than about 2 mm.

Articles formed from thermoplastic compositions according to the present disclosure may include, but are not limited to: a communication device; an enclosure for an electronic device or networking equipment (including routers, switches, hubs, modems and servers); a structural component of an electronic device; a hand-held electronic device; an automotive device; a medical device; a security device; a shielding device; an RF antenna device; an LED device; and an RFID device. Thin-walled articles formed from the present composition may include a portable consumer electronic device, a drug delivery device (particularly as the compositions may be health grade), or a laboratory instrument.

## ASPECTS

The present disclosure comprises at least the following aspects.

Aspect 1. A composition comprising: from about 0.01 wt. % to about 98 wt. % of a polycarbonate polymer component; and from greater than 1 wt. % to about 10 wt. % of a perfluorinated polyether additive, wherein the combined weight percent value of all components does not exceed 100 wt. %, and all weight percent values are based on the total weight of the composition, wherein the composition exhibits a viscosity less than that of a substantially identical composition in the absence of the perfluorinated polyether additive when tested in accordance with ASTM D3835 at a shear rate of 500 $s^{-1}$ and wherein a molded article comprising the composition has a wear factor K of less than 200 x $10^{-10}$ in 5-min/ft-lb-hr as measured at 50 fpm and 40 psi compared to steel in accordance with a modified ASTM D-3702.

Aspect 2. The composition of aspect 1, wherein the composition exhibits a viscosity less than that of a substantially identical composition in the absence of the perfluorinated polyether additive when tested in accordance with ASTM D3835 at a shear rate of 1000 s-1, 1500 s-1, 2000 s-1, 2500 s-1, 3000 s-1, 3500 s-1, or 4000 s-1.

Aspect 3. The composition of any of aspects 1-2, wherein the polycarbonate polymer component comprises a polycarbonate copolymer.

Aspect 4. The composition of any of aspects 1-2, wherein the polycarbonate polymer component comprises a polycarbonate-polysiloxane copolymer.

Aspect 5. The composition of any of aspects 1-4, wherein the perfluorinated polyether additive comprises a compound of the formula $F-(CF(CF_3)-CF_2-O)_n-CF_2CF_3$.

Aspect 6. The composition of any of aspects 1-5, wherein the perfluorinated polyether additive has a degree of polymerization, n, generally lies within the range of 10 to 60.

Aspect 7. The composition of any of aspects 1-6, wherein the perfluorinated polyether additive is present in an amount of from greater than 2 wt. % to about 10 wt. %.

Aspect 8. The composition of any of aspects 1-6, wherein the perfluorinated polyether additive is present in an amount of from greater than 3 wt. % to about 10 wt. %.

Aspect 9. The composition of any of aspects 1-6, wherein the perfluorinated polyether additive is present in an amount of from greater than 4 wt. % to about 10 wt. %.

Aspect 10. The composition of any of aspects 1-6, wherein the perfluorinated polyether additive is present in an amount of from greater than 3 wt. % to about 8 wt. %.

Aspect 11. The composition of any of aspects 1-10, further comprising an additive.

Aspect 12. The composition of aspect 11, wherein the additive comprises a pigment, a dye, a filler, a plasticizer, a fiber, a flame retardant, an antioxidant, a lubricant, an ultraviolet agent, an anti-static agent, an anti-microbial agent, or a combination thereof.

Aspect 13. An article comprising the composition of any of aspects 1-12.

Aspect 14. The article of aspect 13, wherein the article comprises a portable consumer electronic device, a drug delivery device, or a laboratory instrument.

Aspect 15. A method of forming an article, the method comprising: combining, to form a composition, from about 0.01 wt. % to about 98 wt. % of a polycarbonate polymer component, and from greater than 1 wt. % to about 10 wt. % of a perfluorinated polyether additive, wherein the combined weight percent value of all components does not exceed 100 wt. %, and all weight percent values are based on the total weight of the composition, and molding an

article from the composition, wherein the composition exhibits a viscosity less than that of a substantially identical composition in the absence of the perfluorinated polyether additive when tested in accordance with ASTM D3835 at a shear rates of 500 $s^{-1}$ to 4000 $s^{-1}$ and wherein a molded article comprising the composition has a wear factor K of less than 200 x $10^{-10}$ in 5-min/ft-lb-hr as measured at 50 fpm and 40 psi compared to steel in accordance with a modified ASTM D-3702.

Unless otherwise expressly stated, it is in no way intended that any method set forth herein be construed as necessarily requiring that its steps be performed in a specific order. Where a method claim does not specifically state in the claims or descriptions that the steps are to be limited to a specific order, it is no way intended that an order be inferred, in any respect.

All publications mentioned herein are incorporated herein by reference to, for example, describe the methods and/or materials in connection with which the publications are cited.

It is also to be understood that the terminology used herein is for the purpose of describing particular aspects only and is not intended to be limiting. As used in the specification and in the claims, the term "comprising" may include the aspects "consisting of' and "consisting essentially of." Unless defined otherwise, all technical and scientific terms used herein have the same meaning as commonly understood by one of ordinary skill in the art to which this disclosure belongs.

Unless otherwise specified, average molecular weights refer to weight average molecular weights ($M_w$) and percentages refer to weight percentages (wt. %) which, unless specifically stated to the contrary, are based on the total weight of the composition in which the component is included. In all cases, where combinations of ranges are provided for a given composition, the combined value of all components does not exceed 100 wt%.

Component materials to be used to prepare disclosed thermoplastic compositions of the disclosure as well as the thermoplastic compositions themselves to be used within methods are disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. This concept applies to all aspects of this application including, but not limited to, steps in methods of making and using the thermoplastic compositions of the disclosure.

References in the specification and concluding claims to parts by weight, of a particular element or component in a composition or article denotes the weight relationship between the element or component and any other elements or components in the composition or article for which a part by weight is expressed. Thus, in a composition containing 2 parts by weight of component X and 5 parts by weight component Y, X and Y are present at a weight ratio of 2:5, and are present in such ratio regardless of whether additional components are contained in the compound.

Compounds disclosed herein are described using standard nomenclature. For example, any position not substituted by any indicated group is understood to have its valency filled by a bond as indicated, or a hydrogen atom.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i {M_i}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g. polycarbonate polymers, by methods well known to a person having ordinary skill in the art using

molecular weight standards, e.g. polycarbonate standards or polystyrene standards, preferably certified or traceable molecular weight standards.

The terms "polycarbonate" or "polycarbonates" as used herein includes copolycarbonates, homopolycarbonates and (co)polyester carbonates.

As used herein, degree of polymerization, n, may describe the number of monomeric units (or repeating units) in a given polymer molecule.

As used herein, health grade may describe a material that meets standards according to ISO and the Food and Drug Administration.

In one aspect, "substantially free of' may refer to less than 0.5 wt. % or less than about 0.5 wt.% present in a given composition or component. In another aspect, substantially free of can be less than 0.1 wt. %, or less than about 0.1 wt.%. In another aspect, substantially free of can be less than 0.01 wt. %, or less than about 0.01 wt.%. In yet another aspect, substantially free of can be less than 100 parts per million (ppm), or less than about 100 ppm. In yet another aspect, substantially free can refer to an amount, if present at all, below a detectable level.

## EXAMPLES

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. Best efforts have been made to ensure accuracy with respect to numbers (e.g., amounts, temperature, etc.), but some errors and deviations should be accounted for. Unless indicated otherwise, weight percent, temperature is in degrees Celsius (°C) (ambient temperature unless specified otherwise), and pressure is at or near atmospheric.

Table 1 shows the formulations analyzed for the presented disclosure. Assessed samples included a neat resin (polycarbonate-polysiloxane copolymer HPX8R, EXL from SABIC™) as well as the resin with 2% silicone, with 5% polytetrafluoroethylene (PTFE, a fluoropolymer of tetrafluoroethylene), with 2% perfluorinated polyether (PFPE), and with 5% PFPE. PTFE and silicone were comparatively evaluated as lubricants as they are conventionally used to solve friction issues in the art. The 5% PFPE containing HPX8R was produced three times under the names shown in the table.

| **Formulations** | | | **Neat PC Copoly.** | **2% Silicone** | **5% PTFE** | **5% PFPE** | **2% PFPE** |
|---|---|---|---|---|---|---|---|
| **Item Description** | **Item** | **Unit** | **HPX8R** | **HPX8R-S2** | **HPX8R-P1 -5** | **HPX8R-P2-5, HPX8R-5FE, ER00955 4-8HNAT** | **HPX8R-2FE** |
| AS-SL_360 MED FLUID 12,500_LI_ NCA | Silicone | % | - | 2 | - | - | - |
| FP-TFE_POLYMIST F284_PO_NCA | PTFE | % | - | - | 5 | - | - |
| FP-OTH FLUOROGUA RD SG_LI+NCA | PFPE | % | - | - | - | 5 | 2 |
| HPX8R-2H9D044T | PC-Copoly. | % | 100 | 98 | 95 | 95 | 98 |
| **Formulation Total** | | | **100** | **100** | **100** | **100** | **100** |

The samples were produced by blending (extrusion) of the PC copolymer resin (as pellets) with the liquid PFPE (Fluoroguard™ SG). The PFPE was added via a standard liquid feeder into the extruder. A standard extrusion profile for HPX8R was used and the 5% PFPE loaded HPX8R was produced and tested three times.

Testing results are summarized in Table 2 (FIG. 1). All three runs and their test results are shown showing the large drop in melt viscosity with shear for the PFPE containing samples versus the neat, silicone containing and PTFE containing versions of the copolymer. The data table (Table 2) also shows the large decrease in wear factor seen between the 2% and the 5% PFPE containing samples (13,600 compared to 1,775). The wear factor was determined using a modified ASTM D-3702 using a Lewis LRI-1a automated wear tester.

Table 2 (shown in FIG. 1) presents the series of compositions assessed for wear properties as well as mechanical

and physical performance. As shown in Table 1, the PFPE additive Fluoroguard™ at or above 2% greatly reduced the viscosity/shear behavior of the PC copolymer resins and at 5% greatly reduced the wear factor (plastic to steel) for the polymer resin composition as shown in Table 1 (FIG. 1).

FIG. 2 provides a graphical representation of the unique attributes for viscosity of the PFPE filled PC copolymer in comparison with neat, silicone and PTFE filled versions of the same copolymer. In attempts to mold a thin-walled part (via standard injection molding), the PFPE filled resin was the only sample that would successfully mold a thin-walled molded part (less than 2 mm thickness).

It will be apparent to those skilled in the art that various modifications and variations can be made in the present disclosure without departing from the scope or spirit of the disclosure. Other aspects of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

**1.** A composition comprising:

from about 0.01 wt. % to about 98 wt. % of a polycarbonate polymer component; and
from greater than 1 wt. % to about 10 wt. % of a perfluorinated polyether additive,
wherein the combined weight percent value of all components does not exceed 100 wt. %, and all weight percent values are based on the total weight of the composition,
wherein the composition exhibits a viscosity less than that of a substantially identical composition in the absence of the perfluorinated polyether additive when tested in accordance with ASTM D3835 at a shear rate of 500 $s^{-1}$, and
wherein a molded article comprising the composition has a wear factor K of less than 200 x $10^{-10}$ in 5-min/ft-1b-hr as measured at 50 fpm and 40 psi compared to steel in accordance with a modified ASTM D-3702.

**2.** The composition of claim 1, wherein the composition exhibits a viscosity less than that of a substantially identical composition in the absence of the perfluorinated polyether additive when tested in accordance with ASTM D3835 at a shear rate of 1000 s-1, 1500 s-1, 2000 s-1, 2500 s-1, 3000 s-1, 3500 s-1, or 4000 s-1.

**3.** The composition of any of claims 1-2, wherein the polycarbonate polymer component comprises a polycarbonate copolymer.

**4.** The composition of any of claims 1-2, wherein the polycarbonate polymer component comprises a polycarbonate-polysiloxane copolymer.

**5.** The composition of any of claims 1-4, wherein the perfluorinated polyether additive comprises a compound of the formula $F-(CF(CF_3)-CF_2-O)_n-CF_2CF_3$.

**6.** The composition of any of claims 1-5, wherein the perfluorinated polyether additive has a degree of polymerization, n, generally lies within the range of 10 to 60.

**7.** The composition of any of claims 1-6, wherein the perfluorinated polyether additive is present in an amount of from greater than 2 wt. % to about 10 wt. %.

**8.** The composition of any of claims 1-6, wherein the perfluorinated polyether additive is present in an amount of from greater than 3 wt. % to about 10 wt. %.

**9.** The composition of any of claims 1-6, wherein the perfluorinated polyether additive is present in an amount of from greater than 4 wt. % to about 10 wt. %.

**10.** The composition of any of claims 1-6, wherein the perfluorinated polyether additive is present in an amount of from

greater than 3 wt. % to about 8 wt. %.

**11.** The composition of any of claims 1-10, further comprising an additive.

**12.** The composition of claim 11, wherein the additive comprises a pigment, a dye, a filler, a plasticizer, a fiber, a flame retardant, an antioxidant, a lubricant, an ultraviolet agent, an anti-static agent, an anti-microbial agent, or a combination thereof.

**13.** An article comprising the composition of any of claims 1-12.

**14.** The article of claim 13, wherein the article comprises a portable consumer electronic device, a drug delivery device, or a laboratory instrument.

**15.** A method of forming an article, the method comprising:
combining, to form a composition,

from about 0.01 wt. % to about 98 wt. % of a polycarbonate polymer component, and
from greater than 1 wt. % to about 10 wt. % of a perfluorinated polyether additive,
wherein the combined weight percent value of all components does not exceed 100 wt. %, and all weight percent values are based on the total weight of the composition,
and molding an article from the composition,
wherein the composition exhibits a viscosity less than that of a substantially identical composition in the absence of the perfluorinated polyether additive when tested in accordance with ASTM D3835 at a shear rates of 500 $s^{-1}$ to 4000 $s^{-1}$ and
wherein a molded article comprising the composition has a wear factor K of less than 200 x $10^{-10}$ in 5-min/ft-lb-hr as measured at 50 fpm and 40 psi compared to steel in accordance with a modified ASTM D-3702.

**Table 2. Viscosity and Physical Performance of Polycarbonate Resin Samples Having Different Additives**

| Measured Viscosity (Pa*s) vs. Shear Rate ($s^{-1}$)(ASTM D3835 – Multipoint Melt Viscosity by Capillary Rheometer | | | | | | COF | Wear Factor K | Specific Gravity | Density | Flex Modulus (Mpa) | Flex Stress @ 5% Strain (Mpa) | Ductility (%) | Impact Strength (J/m) | Modulus of Elasticity (MPa) | Tensile Strength @ Yield (Mpa) | Tensile Strength @ Break (Mpa) |
|---|---|---|---|---|---|---|---|---|---|---|---|---|---|---|---|---|
| Shear Rate ($s^{-1}$) | 500 | 1000 | 2000 | 3000 | 4000 | LNP method | | ASTM D792 | | ASTM D790 | | ASTM D256 & D4812 | | ASTM D638 | | |
| Neat Resin | 274 | 231 | 180 | 148 | 127 | 0.48 | 266000 | 1.190 | 1.187 | 2130 | 83 | 100 | 582 | 2260 | 58.1 | 52.4 |
| 2% Silicone | 253 | 212 | 155 | 127 | 112 | 0.141 | 90 | 1.184 | 1.181 | 2110 | 81.3 | 80 | 625 | 2208 | 54.9 | 49.5 |
| 5% PTFE | 294 | 244 | 186 | 152 | 130 | 0.146 | 1775 | 1.218 | 1.215 | 2040 | 78.1 | 0 | 120 | 2203 | 53.5 | 41.7 |
| 2% PFPE | 86 | 78 | 66 | 54 | 51 | 0.550 | 13600 | 1.198 | 1.195 | 2040 | 75.6 | 0 | 682 | 2148 | 53.8 | 56.0 |
| 5% PFPE | 206 | 112 | 80 | 65 | 54 | 0.163 | 112 | 1.211 | 1.208 | 2020 | 77.5 | 100 | 622 | 2140 | 54.3 | 50.3 |
| 5% PFPE, batch 2 | 85 | 74 | 57 | 45 | 34 | 0.387 | 162 | 1.209 | 1.209 | 2080 | 81.1 | 100 | 616 | 2176 | 57.5 | 44.5 |
| 5% PFPE, ER009554-8HNAT | 161 | 129.1 | 75.8 | 66.6 | 59.1 | 0.334 | 385 | 1.211 | 1.211 | 1990 | 79.3 | 100 | 603 | 2040 | 58.2 | 44.7 |

FIG. 1

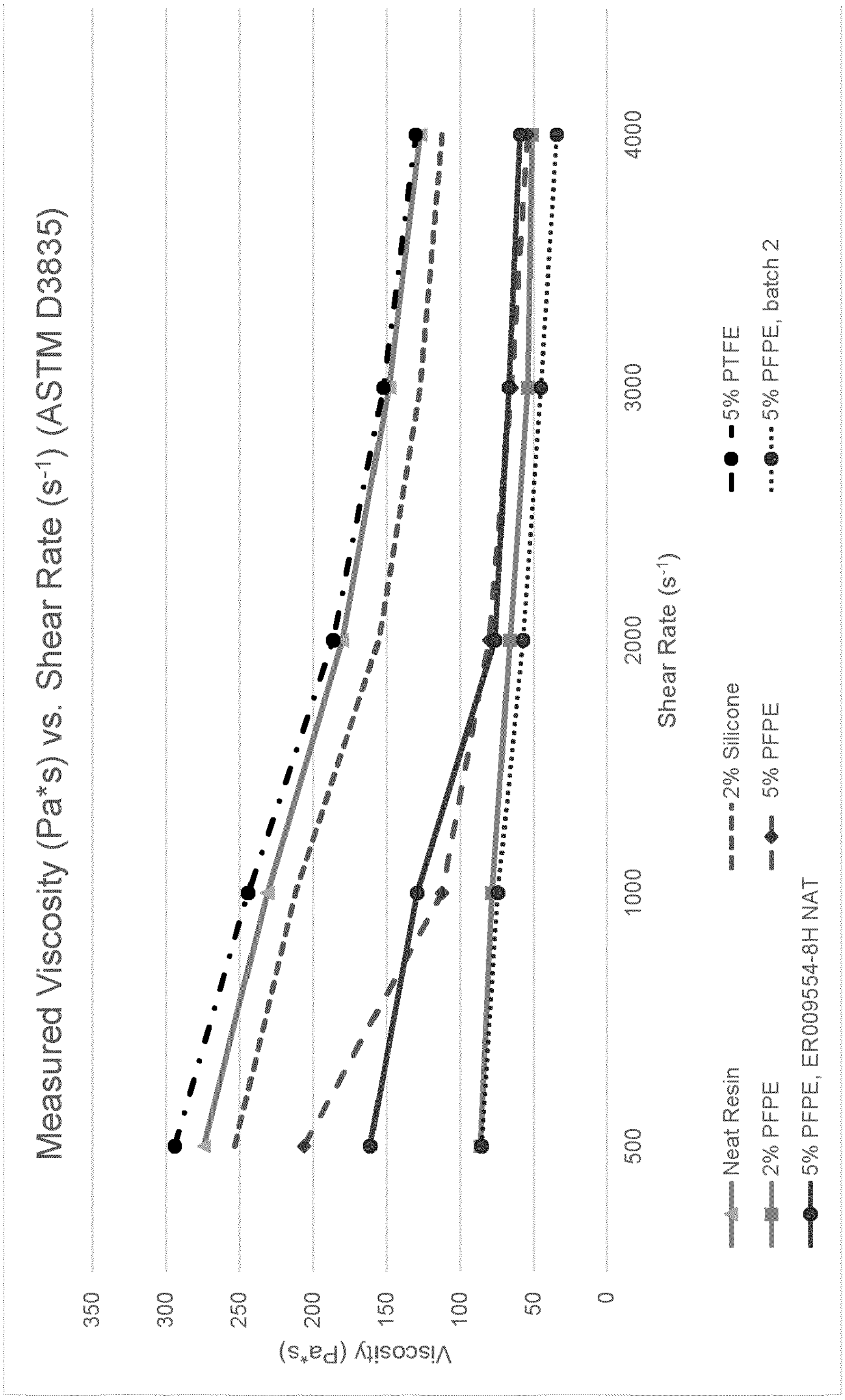

Measured Viscosity (Pa*s) vs. Shear Rate (s-1) (ASTM D3835)
Viscosity (Pa*s)
350
300
250
200
150
100
50
0
500
1000
2000
3000
4000
Shear Rate (s-1)
Neat Resin
2% Silicone
5% PTFE
2% PFPE
5% PFPE
5% PFPE, batch 2
5% PFPE, ER009554-8H NAT


FIG. 2

Europäisches Patentamt
European Patent Office
Office européen des brevets

# EUROPEAN SEARCH REPORT

Application Number
EP 19 19 8610

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2009/318047 A1 (BRUNING HANS-JOACHIM [DE] ET AL) 24 December 2009 (2009-12-24)<br>* claims 1,3 *<br>* paragraph [[0057]] *<br>----- | 1-3,5-14 | INV.<br>C08L69/00<br>C08G65/00 |
| X | WO 91/08254 A1 (RESEARCH DEV CORP [US]) 13 June 1991 (1991-06-13)<br>* example 3 *<br>* page 23 *<br>* claims 1-44 *<br>----- | 1-15 | |
| X | US 5 143 963 A (STERLING ROBERT E [US] ET AL) 1 September 1992 (1992-09-01)<br>* example 3 *<br>* column 11, line 50 - column 12, line 7 *<br>----- | 1-15 | |

TECHNICAL FIELDS SEARCHED (IPC)

C08G
C08L

The present search report has been drawn up for all claims

1

| Place of search | Date of completion of the search | Examiner |
|---|---|---|
| The Hague | 26 November 2019 | Popescu, Teodora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 19 8610

This annex lists the patent family members relating to the patent documents cited in the above-mentioned European search report. The members are as contained in the European Patent Office EDP file on
The European Patent Office is in no way liable for these particulars which are merely given for the purpose of information.

26-11-2019

| Patent document cited in search report | Publication date | Patent family member(s) | Publication date |
|---|---|---|---|
| US 2009318047 A1 | 24-12-2009 | DE 102008028617 A1 | 24-12-2009 |
| | | EP 2135982 A2 | 23-12-2009 |
| | | JP 2010001596 A | 07-01-2010 |
| | | US 2009318047 A1 | 24-12-2009 |
| WO 9108254 A1 | 13-06-1991 | AU 6618290 A | 26-06-1991 |
| | | CA 2029404 A1 | 07-06-1991 |
| | | EP 0504152 A1 | 23-09-1992 |
| | | JP 2631911 B2 | 16-07-1997 |
| | | JP H05504581 A | 15-07-1993 |
| | | WO 9108254 A1 | 13-06-1991 |
| US 5143963 A | 01-09-1992 | US 5143963 A | 01-09-1992 |
| | | US 5286773 A | 15-02-1994 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100019487 A
- US 20090318047 A
- US 7786246 B


### Non-patent literature cited in the description


- *Plastic Additives & Compounding,* January 2001, 30-32
- *Journal of Fluorine Chemistry,* 2011, vol. 132, 885-891
- *Plastics Additives & Compounding,* February 2001, 28-30